# FASCICULE DE BREVET EUROPEEN

(11) **EP 1 466 802 B1**
(45) Date de publication et mention de la délivrance du brevet: **11.01.2006**
(21) Numéro de dépôt: 04300121.3
(22) Date de dépôt: 05.03.2004
(51) Int. Cl.: B61D 19/02, B61D 27/00

(54) **Véhicule ferroviaire comprenant une porte d'intercirculation à joint d'étanchéité gonflable et procédé de réalisation correspondant**
Schienenfahrzeug mit einer Übergangstür mit aufblasbarer Dichtung und entsprechendes Aufbauverfahren
Rail vehicle comprising an intercommunication door having an inflatable gasket and corresponding building method

(30) Priorité: 12.03.2003 FR 0303064
(43) Date de publication de la demande: 13.10.2004
(73) Titulaire: Alstom, 92300 Levallois-Perret (FR)
(72) Inventeur: Descleve, Claude Alstom, 02600 Villers-Cotterets (FR); Devallez, Alain Alstom, 59278 Escautpont (FR)
(74) Mandataire: Blot, Philippe Robert Emile

(56) Documents cités:
- EP-A- 0 234 297
- EP-A- 0 293 051
- EP-A- 0 684 172
- EP-A- 0 900 708
- AT-B- 400 426
- DE-A- 4 216 692

## Description

La présente invention concerne un véhicule ferroviaire du type comprenant une caisse s'étendant longitudinalement et comprenant, à au moins une extrémité longitudinale, une porte d'accès longitudinal à l'intérieur de la caisse, la porte comprenant un encadrement délimitant une ouverture et un vantail mobile par rapport à l'encadrement entre une position d'obturation et une position de libération de l'ouverture, la porte comprenant en outre au moins un joint d'étanchéité entre l'encadrement et le vantail .

On connaît des véhicules ferroviaires du type précité. Dans une rame constituée de tels véhicules, les extrémités longitudinales de deux véhicules adjacents sont reliées par un soufflet d'intercirculation qui permet de passer longitudinalement d'un véhicule à l'autre, via les portes d'accès longitudinal. Les joints d'étanchéité présents entre les encadrements et les vantaux de ces portes sont généralement des joints à lèvres assurant une étanchéité à l'eau.

Lorsqu'une telle rame passe dans un tunnel, des ondes de pression peuvent être engendrées et pénétrer à l'intérieur des véhicules, si la vitesse de la rame est suffisamment élevée et si les dimensions du tunnel sont suffisamment réduites. De telles ondes nuisent au confort tympanique des passagers des véhicules.

Pour pallier cet inconvénient, on a proposé dans les trains circulant à grande vitesse de réaliser des soufflets d'intercirculation étanches à l'air. Ainsi, les ondes de pression engendrées entre la rame et un tunnel dans lequel elle circule, ne peuvent pénétrer à l'intérieur des véhicules.

Toutefois, cette solution n'est pas applicable à l'extrémité avant de la rame, qui est attelée à une motrice sans utiliser de soufflet d'intercirculation, ni à l'extrémité arrière de la rame, qui n'est reliée à aucun autre véhicule.

En outre, cette solution nécessite de disposer d'outils spéciaux pour pouvoir assurer l'étanchéité à l'air entre chaque soufflet d'intercirculation et les véhicules qu'il relie, ce qui n'est pas nécessairement le cas dans tous les dépôts où les rames vont être constituées.

Le brevet autrichien AT-B-400 426 décrit un véhicule ferroviaire du type précité comprenant un joint d'étancheité gonflable conformément au préambule de la revendication 1.

Un but de l'invention est de fournir un véhicule du type précité qui permette d'améliorer de manière plus systématique et moins contraignante le confort tympanique des passagers.

A cet effet, l'invention a pour objet un véhicule ferroviaire selon le préambule de la revendication 1 caractérisé en ce que un joint d'étanchéité gonflable est prévu du côté du vantail orienté vers l'intérieur de la caisse et un autre joint d'étanchéité gonflable est prévu du côté du vantail orienté vers l'extérieur de la caisse.

Selon des modes particuliers de réalisation, le véhicule ferroviaire peut comprendre l'une ou plusieurs des caractéristiques suivantes, prise(s) isolément ou selon toutes les combinaisons techniquement possibles :
- le ou chaque joint d'étanchéité gonflable est porté par le vantail ;
- l'encadrement est monté sur la caisse par l'intermédiaire de pièces d'assemblage munies d'orifices oblongs de passage d'organes de fixation ;
- les pièces d'assemblage comprennent des équerres ;
- l'encadrement est réalisé sous forme d'un ensemble d'un seul tenant rapporté sur la caisse ;
- des joints d'étanchéité sont prévus entre l'encadrement et la caisse ;
- le véhicule comprend un circuit pneumatique pour gonfler et dégonfler le ou chaque joint d'étanchéité gonflable ; et
- le circuit pneumatique comprend des moyens de création d'une dépression pour aspirer l'air contenu dans le ou chaque joint d'étanchéité gonflable.

L'invention a en outre pour objet un procédé de réalisation d'un véhicule ferroviaire tel que mentionné ci-dessus, caractérisé en ce qu'il comprend des étapes de :
- fourniture de la porte sous forme d'un module préassemblé comprenant au moins l'encadrement et le vantail, et
- fixation de la porte sur la caisse du véhicule ferroviaire.

L'invention sera mieux comprise à la lecture de la description qui va suivre, donnée uniquement à titre d'exemple, et faite en se référant aux dessins annexés, sur lesquels :
- la figure 1 est une vue partielle, schématique en bout, prise de l'extérieur, et illustrant une extrémité longitudinale d'un véhicule ferroviaire selon l'invention,
- la figure 2 est une vue schématique, partielle et prise de l'intérieur, illustrant la porte équipant l'extrémité longitudinale de la figure 1,
- la figure 3 est une vue schématique en coupe verticale et médiane de la porte de la figure 2,
- la figure 4 est une section schématique, horizontale de la porte, prise suivant la ligne IV-IV de la figure 3, et
- les figures 5 à 7 sont des vues schématiques illustrant le fonctionnement du circuit pneumatique d'alimentation des joints de la porte des figures 2 à 4 pendant leur gonflage et leur dégonflage.

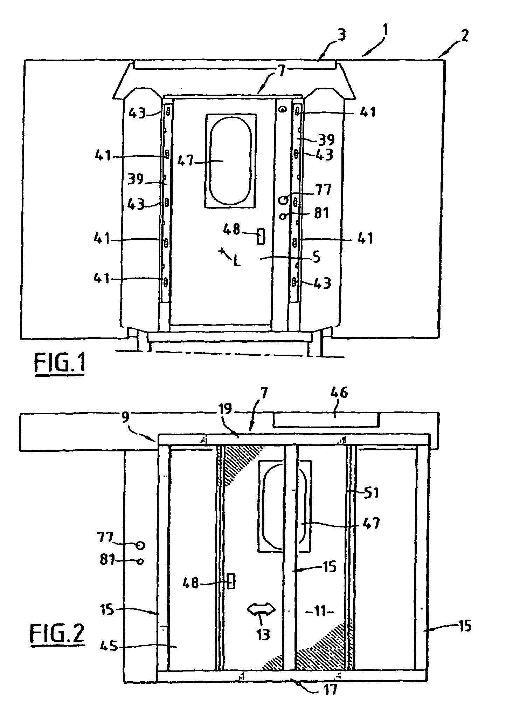

La figure 1 illustre schématiquement un véhicule ferroviaire 1.

De manière classique, ce véhicule ferroviaire 1 comprend une caisse 2 s'étendant le long d'une direction longitudinale L. La caisse 2 comprend des portes latérales (non-représentées) d'accès à l'intérieur de la caisse 2.

Les extrémités longitudinales 3 du véhicule 1 ont une structure analogue de sorte que seule celle représentée sur la figure 1 sera décrite par la suite. La caisse 2 délimite à l'extrémité 3 un passage d'intercircuiation 5 muni d'une porte d'intercirculation 7.

De manière classique également, la caisse 2 est montée sur des bogies (non-représentés) pour permettre au véhicule 1 de rouler sur des rails. Le véhicule 1 comprend en outre des moyens d'attelage à un véhicule adjacent pour pouvoir former une rame.

Le passage 5 et la porte 7 permettent, lorsque le véhicule 1 est intégré dans une telle rame, de passer longitudinalement du véhicule 1 à un véhicule adjacent auquel il est attelé. La porte 7 est donc une porte d'accès longitudinal à l'intérieur de la caisse 2.

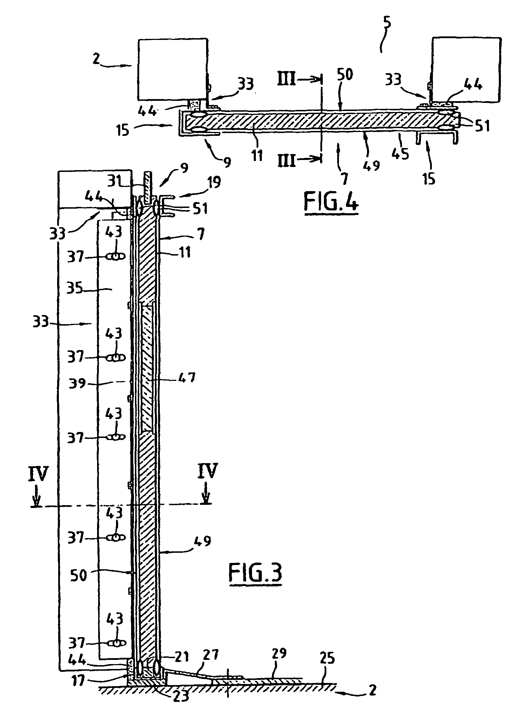

Les figures 2 à 4 illustrent la structure de la porte 7. Sur la figure 3, l'intérieur de la caisse 2 est situé du côté droit et l'extérieur de la caisse 2 du côté gauche. Sur la figure 4, l'intérieur de la caisse 2 est situé en bas et l'extérieur de la caisse 2 en haut.

La porte 7 comprend un encadrement fixe 9 et un vantail 11 mobile latéralement par coulissement par rapport à l'encadrement 9, comme matérialisé par la double flèche 13 sur la figure 2.

L'encadrement 9 comprend par exemple trois montants verticaux 15 espacés latéralement l'un de l'autre, et une traverse inférieure 17 et une traverse supérieure 19 qui relient les montants 15.

L'encadrement 9 est un ensemble d'un seul tenant constitué par soudage d'éléments métalliques et notamment de profilés.

La traverse inférieure 17 forme barre de seuil et elle comprend un rail inférieur 21 de guidage du vantail 11. La traverse inférieure 17 repose par l'intermédiaire de deux cales 23 sur le plancher 25 de la caisse 2 du véhicule 1. Ces deux cales 23 sont disposées l'une à côté de l'autre de sorte qu'une seule est visible sur la figure 3.

Un panneau incliné 27 prend appui d'un côté sur un revêtement 29 recouvrant le plancher 25 et d'un autre côté sur la traverse inférieure 17 pour que les pieds des passagers ne rencontrent pas de bord saillant.

La traverse supérieure 19 comprend un rail supérieur 31 de guidage du vantail 11.

Comme illustré par la figure 4, le montant 15 gauche (comme vu de l'intérieur de la caisse 2) est constitué par un profilé de section en U ouvert vers la droite pour recevoir le bord gauche du vantail 11 lorsqu'il est en position fermée.

Le montant 15 droit, qui n'est pas visible sur la figure 4, a par exemple une structure analogue, la section du profité étant cependant ouverte vers la gauche pour pouvoir recevoir le bord droit du vantail 11 lorsqu'il est en position ouverte.

Le montant central 15 a une section ouverte latéralement pour permettre le déplacement latéral du vantail 11.

L'encadrement 9 est monté sur la caisse 2 par l'intermédiaire d'équerres d'assemblage 33. Plus précisément, deux équerres 33 verticales relient les montants 15 gauche et central à la caisse 2 et une équerre 33 horizontale relie la traverse supérieure 19 à la caisse 2.

Comme on le voit par exemple sur les figures 1, 3 et 4, les équerres 33 verticales comprennent une première aile 35 munie d'orifices oblongs 37 orientés horizontalement, et une autre aile 39 qui est munie d'orifices oblongs 41 qui sont eux orientés verticalement. Les orifices oblongs 37 et 41 reçolvent des organes de fixation 43 tels que des vis engagées respectivement dans la caisse 2 et dans l'encadrement 9.

L'équerre 33 horizontale reliant la traverse supérieure 19 à la caisse 2 a une structure analogue avec des orifices oblongs orientés dans deux directions différentes.

En outre, la jonction entre la caisse 2 et l'encadrement 9 est complétée par des joints d'étanchéité 44 en mastic et en mousse disposés dans les interstices demeurant entre la caisse 2 et l'encadrement 9. L'utilisation de la mousse permet de limiter la quantité de mastic et de faciliter le démontage des joints 44.

Dans certaines variantes, on peut également réaliser les joints 44 en mastic et à base de nitrile.

L'encadrement 9 délimite entre les montants 15 gauche et central une ouverture 45 qui communique longitudinalement avec le passage d'intercirculation 5.

Le vantail 11 est mobile latéralement entre une position fermée d'obturation de l'ouverture 45, illustrée par la figure 4, et une position ouverte de libération de cette ouverture 45. Dans sa position ouverte, le vantail 11 a coulissé vers la droite comme vu de l'intérieur de la caisse 2. Sur la figure 2, le vantail 11 est représenté dans une position intermédiaire entre ces deux positions.

La porte 7 comprend un moteur 46 (fig.2) d'entraînement du vantail 11 pour lui permettre de passer de l'une à l'autre de ses positions.

Le vantail 11 comprend une vitre 47 et deux poignées 48 de manoeuvre. Le vantail 11 est muni sur sa face intérieure 49 et sur sa face extérieure 50 d'un joint 51.

Chaque joint 51 s'étend sur tout le pourtour de la face correspondante du vantail 11. Chaque joint 51 est un joint gonflable qui comprend un corps creux susceptible d'être alimenté en air sous pression.

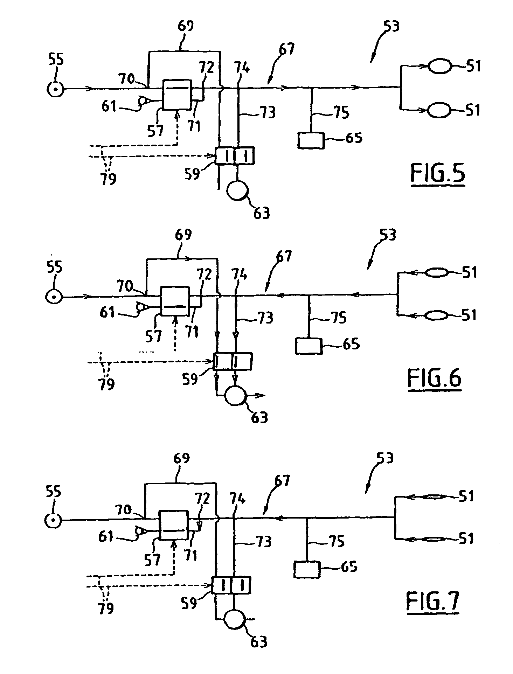

Pour cela, la porte 7 comprend un circuit 53 d'alimentation en air comprimé illustré par la figure 5.

Ce circuit 53 comprend principalement :
- une source d'air comprimé 55.
- deux distributeurs 57 et 59 à deux voies et à deux positions.
- un clapet anti-retour 61,
- une pompe à vide 63 fonctionnant par exemple sur le principe de l'effet Venturi, et
- un capteur de pression 65.

Le circuit 53 comprend en outre une conduite principale 67 qui relie la source de pression 55 aux joints 51 en passant par une première voie du distributeur 57.

Une première conduite auxiliaire 69 est raccordée à la conduite principale 67, en un point 70 en amont du distributeur 57, puis passe au travers d'une première voie du second distributeur 59 afin d'alimenter la pompe à vide 63.

Une seconde conduite auxiliaire 71 s'étend, depuis un point 72 de la conduite 67 situé en aval du distributeur 57, au travers de la seconde voie du distributeur 57 jusqu'au clapet anti-retour 61.

Une troisième conduite auxiliaire 73 relie un point 74 de la conduite 67, situé en aval du point 72, à l'aspiration de la pompe à vide 63 en passant au travers de la seconde voie du distributeur 59. Enfin, un piquage 75, situé en aval du point 74, met le capteur 65 en communication avec la conduite 67.

Comme on le voit sur la figure 5, lorsque le vantail 11 est en position fermée, le distributeur 59 obture les conduites 69 et 73 de sorte que la pompe à vide 63 est isolée du reste du circuit 53. Le distributeur 57 obture la conduite 71 de sorte que le clapet 61 est isolé du reste du circuit 53. Les joints 51 sont alimentés en air comprimé via la conduite 67, au travers de la première voie du distributeur 57. Les joints 51 gonflés sont ainsi appliqués sur des surfaces planes des montants 15 gauche et central et des traverses 17 et 19 comme on le voit sur les figures 3 et 4. Les joints 51 assurent alors une étanchéité à l'air entre l'encadrement 9 et le vantail 11.

Lorsque l'on souhaite ouvrir la porte 7, on actionne l'un ou l'autre de deux boutons poussoirs 77 (fig.1 et 2) prévus sur la caisse 2 à côté de la porte 7.

L'actionnement d'un bouton 77 engendre la création de signaux électriques 79 de commande des distributeurs 57 et 59 qui changent de positions.

Comme illustré par la figure 6, le distributeur 57 obture alors la conduite principale 67 de sorte que les joints 51 ne sont plus alimentés en air comprimé.

Le distributeur 59 n'obture plus les conduites auxiliaires 69 et 73 de sorte que la pompe à vide 63 est alimentée via la conduite G9 en air comprimé ce qui lui permet d'aspirer par la conduite 73 l'air présent dans les joints 51.

Le distributeur 57 n'obture plus la conduite 71 de sorte que les joints gonflables 51 sont également mis à l'air par l'intermédiaire du clapet anti-retour 61. Le clapet 61 étant anti-retour, de l'air extérieur n'est pas aspiré par la pompe à vide 63.

Après une durée prédéterminée, par exemple quelques secondes, correspondant au temps de dégonflage des joints 51, un signal électrique 79 provoque un changement de position du distributeur 59 qui obture à nouveau les conduites auxiliaires 69 et 73, comme illustré par la figure 7. La pression à l'intérieur des joints 51 et alors inférieure à la pression extérieure et les joints 51 sont alors rétractés dans le vantail 11.

Le vantail 11 est ensuite entraîné par le moteur 46 vers sa position ouverte.

Pour refermer la porte 7, on peut actionner un des deux boutons 81 (fig.1 et 2) prévu sur la caisse 2, à côté de la porte 7.

Cela provoque l'entraînement par le moteur 46 du vantait 11 et lorsque le vantail 11 est dans sa position d'obturation de l'ouverture 45, le regonflage des joints 51.

Pour cela, un signal électrique 79 est envoyé vers le distributeur 57 qui revient dans sa position de la figure 5. Les joints 51 sont alors alimentés en air comprimé et reprennent leurs positions des figures 3 et 4.

Le capteur 65 permet de contrôler le niveau de pression dans les joints 51 lorsque la porte 7 est fermée. Le capteur 65 provoque l'émission d'un signal lorsque la pression dans les joints 51 est anormalement basse, indiquant ainsi que l'étanchéité n'est pas assurée et, par exemple, qu'un joint 51 est défectueux.

Le circuit pneumatique 53 comprend en outre un organe d'actionnement manuel (non-représenté) permettant d'amener le distributeur 57 dans sa position de la figure 7 dans laquelle il obture la conduite 67 et met l'intérieur des joints 51 à l'air via le clapet 61. Cet organe d'actionnement permet une ouverture manuelle de secours du vantail 11, par l'intermédiaire d'une des poignées 48.

Les joints 51 assurent une étanchéité à l'air entre le vantail 11 et l'encadrement 9 lorsque le vantail 11 est en position fermée. Ainsi, les ondes de pression engendrées à l'extérieur du véhicule 1 lorsqu'il pénètre dans un tunnel ne se propagent pas à l'intérieur du véhicule 1. Le confort tympanique des passagers du véhicule 1 est donc préservé. En outre, le confort tympanique est obtenu quelle que soit la position du véhicule 1 dans une rame et sans qu'il soit nécessaire de prévoir des outils particuliers dans les dépôts où de telles rames vont être constituées.

L'étanchéité à l'air est encore accrue du fait de la présence de joints gonflables 51 à la fois sur la face intérieure 49 et sur la face extérieure 50 du vantail 11.

Toutefois, on notera que dans certaines variantes, un joint 51 peut n'être prévu que d'un côté du vantail 11. Dans encore une autre variante, le ou les joints 51 peuvent être prévus sur l'encadrement 9.

En outre, la porte 7 a un temps de montage réduit sur la caisse 2, notamment grâce à la réalisation de l'encadrement 9 sous forme d'un ensemble d'un seul tenant.

En effet, on peut tout d'abord réaliser la porte 7 sous forme d'un module prêassemblé comprenant l'encadrement 9, le vantail 11, et, par exemple, le moteur 46 et éventuellement les joints 51 et/ou tout ou partie du circuit 53 d'alimentation des joints 51. Ce module préassemblé peut ensuite être monté très rapidement sur la caisse 2 tout en compensant les défauts géométriques de la caisse 2 grâce aux ouvertures oblongues 37 et 41 des équerres 33 et grâce aux cales 23.

Un tel procédé de réalisation s'avère nettement plus rapide et donc moins coûteux à mettre en oeuvre qu'un procédé classique dans lequel l'encadrement est assemblé sur la caisse 2 en compensant au fur et à mesure les défauts géométriques de la caisse 2.

Le dégonflage des joints 51 avant ouverture du vantail 11, et en particulier la création d'une dépression dans les joints 51, permet aux joints 11 de se rétracter et ainsi de limiter l'usure qui pourrait résulter du frottement des joints 51 sur l'encadrement 9.

En outre, le circuit 53 permet d'accélérer le dégonflage des joints 51 ce qui conduit à des temps d'ouverture de la porte 7 relativement réduits.

## Revendications

1. Véhicule ferroviaire (1) du type comprenant une caisse (2) s'étendant longitudinalement et comprenant, à au moins une extrémité longitudinale (3), une porte (7) d'accès longitudinal à l'intérieur de la caisse (2), la porte comprenant un encadrement (9) délimitant une ouverture (45) et un vantail (11) mobile par rapport à l'encadrement (9) entre une position d'obturation et une position de libération de l'ouverture (45), la porte (7) comprenant en outre au moins un joint d'étanchéité gonflable (51) entre l'encadrement (9) et le vantail (11), **caractérisé en ce qu'**un joint d'étanchéité gonflable (51) est prévu du côté (49) du vantail (11) orienté vers l'intérieur de la caisse (2) et un autre joint d'étanchéité gonflable (51) est prévu du côté (50) du vantail (11) orienté vers l'extérieur de la caisse (2).

2. Véhicule selon la revendication 1, **caractérisé en ce que** chaque joint d'étanchéité gonflable (51) est porté par le vantail (11).

3. Véhicule selon l'une des revendications précédentes, **caractérisé en ce que** l'encadrement (9) est monté sur la caisse (2) par l'intermédiaire de pièces d'assemblage (33) munies d'orifices oblongs (37, 41) de passage d'organes de fixation.

4. Véhicule ferroviaire selon la revendication 3, **caractérisé en ce que** les pièces d'assemblage comprennent des équerres (33).

5. Véhicule ferroviaire selon l'une des revendications précédentes, **caractérisé en ce que** l'encadrement (9) est réalisé sous forme d'un ensemble d'un seul tenant rapporté sur la caisse (2).

6. Véhicule ferroviaire selon l'une des revendications précédentes, **caractérisé en ce que** des joints d'étanchéité (44) sont prévus entre l'encadrement (9) et la caisse (2).

7. Véhicule selon l'une des revendications précédentes, **caractérisé en ce qu'**il comprend un circuit pneumatique (53) pour gonfler et dégonfler chaque joint d'étanchéité gonflable (51).

8. Véhicule ferroviaire selon la revendication 7, **caractérisé en ce que** le circuit pneumatique (53) comprend des moyens (63) de création d'une dépression pour aspirer l'air contenu dans chaque joint d'étanchéité gonflable (51).

9. Procédé de réalisation d'un véhicule ferroviaire (1) selon l'une des revendications précédentes, **caractérisé en ce qu'**il comprend des étapes de :
- fourniture de la porte (7) sous forme d'un module préassemblé comprenant au moins l'encadrement (9) et le vantail (11), et
- fixation de la porte (7) sur la caisse (2) du véhicule ferroviaire (1).

## Patentansprüche

1. Eisenbahnfahrzeug (1), umfassend einen Wagenkasten (2), der sich in Längsrichtung erstreckt und mindestens an einem Längsende (3) eine Tür (7) für den Längszugang in das Innere des Wagenkastens (2) umfasst, wobei die Tür einen Rahmen (9), der eine Öffnung (45) begrenzt, und einen Flügel (11) umfasst, der bezüglich des Rahmens (9) zwischen einer Stellung der Schließung und einer Stellung der Freigabe der Öffnung (45) beweglich ist, wobei die Tür (7) ferner mindestens eine aufblasbare Dichtung (51) zwischen dem Rahmen (9) und dem Flügel (11) umfasst, **dadurch gekennzeichnet, dass** eine aufblasbare Dichtung (51) auf der dem Inneren des Wagenkastens (2) zugewandten Seite (49) des Flügels (11) vorgesehen ist und eine andere aufblasbare Dichtung (51) auf der dem Äußeren des Wagenkastens (2) zugewandten Seite (50) vorgesehen ist.

2. Fahrzeug nach Anspruch 1, **dadurch gekennzeichnet, dass** jede aufblasbare Dichtung (51) von dem Flügel (11) getragen wird.

3. Fahrzeug nach einem der vorhergehenden Ansprüche, **dadurch gekennzeichnet, dass** der Rahmen (9) an dem Wagenkasten (2) über Verbindungsteile (33) montiert ist, die mit Langlöchern (37, 41) für den Durchgang von Befestigungsorganen versehen sind.

4. Eisenbahnfahrzeug nach Anspruch 3, **dadurch gekennzeichnet, dass** die Verbindungsteile Winkel (33) umfassen.

5. Eisenbahnfahrzeug nach einem der vorhergehenden Ansprüche, **dadurch gekennzeichnet, dass** der Rahmen (9) in Form einer an dem Wagenkasten (2) angebrachten einstückigen Einheit ausgeführt ist.

6. Eisenbahnfahrzeug nach einem der vorhergehenden Ansprüche, **dadurch gekennzeichnet, dass** zwischen dem Rahmen (9) und dem Wagenkasten (2) Dichtungen (44) vorgesehen sind.

7. Fahrzeug nach einem der vorhergehenden Ansprüche, **dadurch gekennzeichnet, dass** es einen Pneumatikkreis (53) zum Aufblasen und Ablassen jeder aufblasbaren Dichtung (51) umfasst.

8. Eisenbahnfahrzeug nach Anspruch 7; **dadurch gekennzeichnet, dass** der Pneumatikkreis (53) Mittel (63) zur Erzeugung eines Unterdrucks zur Absaugung der in jeder aufblasbaren Dichtung (51) enthaltenen Luft umfasst.

9. Verfahren zur Herstellung eines Eisenbahnfahrzeugs (1) nach einem der vorhergehenden Ansprüche, **dadurch gekennzeichnet, dass** es Schritte der
- Lieferung der Tür (7) in Form eines vormontierten Moduls, das mindestens den Rahmen (9) und den Flügel (11) umfasst, und
- Befestigung der Tür (7) an dem Wagenkasten (2) des Eisenbahnfahrzeugs (1) umfasst.

## Claims

1. Rail vehicle (1) of the type comprising a longitudinally extending body (2) and at at least one longitudinal end (3) comprising a door (7) for longitudinal access to the interior of the body (2), said door comprising a frame (9) defining an opening (45) and a leaf (11), which is movable relative to the frame (45) between a sealing position of the opening (45) and a release position of same, said door (7) additionally comprising at least one inflatable sealing strip (31) between the frame (9) and the leaf (11), **characterised in that** an inflatable sealing strip (51) is provided on the side (49) of the leaf (11) oriented towards the interior of the body (2) and another inflatable sealing strip (51) is provided on the side (50) of the leaf (11) oriented towards the exterior of the body (2).

2. Vehicle according to Claim 1, **characterised in that** each inflatable sealing strip (51) is held by the leaf (11).

3. Vehicle according to one of the preceding claims, **characterised in that** the frame (9) is mounted on the body (2) by means of assembly elements (33) firted with elongated orifices (37, 41) for fastening members to pass through.

4. Rail vehicle according to Claim 3, **characterised in that** the assembly elements comprise brackets (33).

5. Rail vehicle according to one of the preceding claims, **characterised in that** the frame (9) is configured in the form of a single-piece assembly fixed to the body (2).

6. Rail vehicle according to one of the preceding claims, **characterised in that** sealing strips (44) are provided between the frame (9) and the body (2).

7. Vehicle according to one of the preceding claims, **characterised in that** it comprises a pneumatic circuit (53) to inflate and deflate each inflatable sealing strip (51).

8. Rail vehicle according to Claim 7, **characterised in that** the pneumatic circuit (53) comprises means (63) for creating a depression to draw in the air contained in each inflatable sealing strip (51).

9. Process for the production of a rail vehicle (1) according to one of the preceding claims, **characterised in that** it comprises the following steps:
• providing the door (7) in the form of a pre-assembled module comprising at least the frame (9) and the leaf (11), and
• securing the door (7) to the body (2) of the rail vehicle (1).
